# EUROPEAN PATENT APPLICATION

(11) **EP 1 959 616 A1**
(43) Date of publication of application: **20.08.2008**
(21) Application number: 07300796.5
(22) Date of filing: 16.02.2007
(51) Int. Cl.: H04L 12/56

(54) **A method for mobility handling in the packet domain of a mobile communication system supporting mobile IP**

(71) Applicant: ALCATEL, 75008 Paris (FR); El Manouni, Josiane, 75008 Paris (FR)
(72) Inventor: Rombeaut, Jean-Pierre, 59600, MAUBEUGE (FR); Gras, Laurence, 91440, BURES SUR YVETTE (FR)

(57) **Abstract**

One object of the present invention is a method for mobility handling in the packet domain of a mobile communication system supporting Mobile IP, said method comprising:
- a step of home address allocation, using information representative of a requested Packet Data Network or service.

## Description

The present invention generally relates to mobile communication networks and systems.

Detailed descriptions of mobile communication networks and systems can be found in the litterature, in particular in Technical Specifications published by standardisation bodies such as in particular 3GPP (3^{rd} Generation Partnership Project).

It is simply recalled that in a mobile communication system a Mobile Station (or User Equipment) has access to mobile services, such as in particular 3GPP services, delivered by a Core Network via an Access Network. There are different types of mobile services such as in particular packet (PS (Packet Switched)) services, and the Core Network comprises different domains such as in particular a packet (PS) domain.

The present invention more particularly relates to mobility handling in the packet domain. In particular the present invention applies to roaming between different environments such as for example between different access technologies, while maintaining service continuity.

An example of access technology is 3GPP technology, In 3GPP technology, the Access Network is also called RAN (Radio Access Network). Typical examples of RAN include GERAN (GSM/EDGE Radio Access Network, where EDGE stands for Enhanced Data rates for GSM Evolution, and GSM stands for Global System for Mobile communications) and UTRAN (UMTS Terrestrial Radio Access Network, where UMTS stands for Universal Mobile Telecommunication System). A description of RAN such as GERAN or UTRAN can be found in particular in 3GPP Technical Specifications.

3GPP PS domain includes entities like GGSN (Gateway GPRS Support Node). User data traffic is tunnelled across the PS domain to a GGSN using a GTP (GPRS Tunneling Protocol) tunnel sef-up at PDP (Packet Data Protocol) context activation, and then routed to the external PDN (Packet Data Network), such as the Internet or a corporate network, to which the user wants to connect. The external PDN is selected based on the requested APN (Access Point Name), provided by the user at PDP Context Activation procedure.

Another example of access technology is WLAN technology. A description of WLAN technology can be found in particular in the IEEE 802.11 specification family.

A system description for interworking between 3GPP systems and WLANs can be found in particular in 3GPP TS 23.234. The intent of 3GPP - WLAN interworking is to extend 3GPP services and functionality to the WLAN access environment. There are different Interworking Scenarios, with different interworking requirements. In particular, the aim of Scenario 3 is to extend the access to 3GPP PS services to subscribers in a WLAN environment, and the aim of Scenario 4 is, in addition, to maintain service continuity between 3GPP and WLAN access technologies, i.e. to allow users to roam to and from 3GPP and WLAN access technologies while keeping ongoing sessions.

3GPP-WLAN interworking architecture includes entities like PDG (Packet Data Gateway). User data traffic is tunnelled to a PDG using an IPsec tunnel, and then routed to the external PDN to which the user wants to connect. 3GPP TS 23.234 also describes a PDG implementation re-using GGSN (Gateway GPRS Support Node) functionality, wherein the PDG is composed of two components, TTG (Tunnel Termination Gateway) and Subset of GGSN functions; the IPsec tunnel is then terminated by the TTG of the PDG, and the setup of a GTP tunnel is triggered towards the GGSN part of the PDG.

Different techniques have been proposed to maintain service continuity between 3GPP and WLAN access technologies, as required by Interworking Scenario 4.

In particular, it has been proposed to introduce Mobile IP (Mobile Internet Protocol) in 3GPP networks such as GPRS/UMTS networks.

Mobile IP is specified by IETF. It is recalled that Mobile IP allows a MN (Mobile Node) to maintain connectivity to an external PDN using a single and unchanging address (its home address) even when the link layer point of attachment is changing. When the MN moves from the home network to a foreign network it registers with its Home Agent HA an IP address (the Care Of Address COA) that the HA con use to tunnel packets to the MN. The HA intercepts packets addressed to the MN's home address and tunnels these packets to the COA.

Changes to GPRS/UMTS procedures such as the PDP Context activation procedure, to offer Mobile IP over the GPRS/UMTS network (such as for example to allow users to roam between different access technologies while keeping ongoing sessions), are specified for example in 3GPP TS 23.121 or 3GPP TS 29.061.

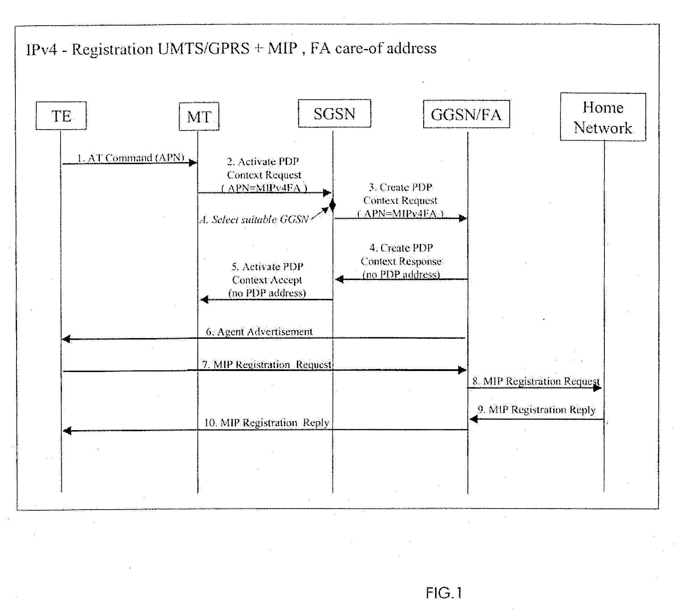

As recalled in figure 1 taken back for example from 3GPP TS 23.121, a PDP context activation procedure with Mobile IP registration comprises the following steps:
- in step 1, the TE (Terminal Equipment) sends an AT command to the MT (Mobile Termination),
- in step 2, the MT (Mobile Termination) sends an Activate PDP Context Request to the SGSN (Serving GPRS Support Node),
- in step 3, the SGSN sends a Create PDP Context Request to the selected GGSN/FA (Gateway GPRS Support Node/Foreign Agent), where GGSN/FA designates a GGSN providing Mobile IP FA functionality,
- in step 4, the GGSN/FA sends a Create PDP Context Response to the SGSN, not including any PDP address,
- in step 5, the SGSN sends an Activate PDP Context Accept to the MT, not including any PDP address,
- in step 6, the GGSN/FA sends an Agent Advertisement to the TE, containing the address of the FA,
- in step 7, the MT sends a MIP Registration Request to the GGSN/FA,
- in step 8, the GGSN/FA sends a MIP Registration Request to the Home Agent HA,
- in step 9, the Home Network sends a MIP Registration Reply to the GGSN/FA, including a home address allocated to the MN by the HA (Home Agent),
- in step 10, the GGSN/FA sends a MIP Registration Reply to the TE.

In a next step, not illustrated, a PDP Context update procedure is performed, so that the home address allocated to the MN is inserted in the PDP Context.

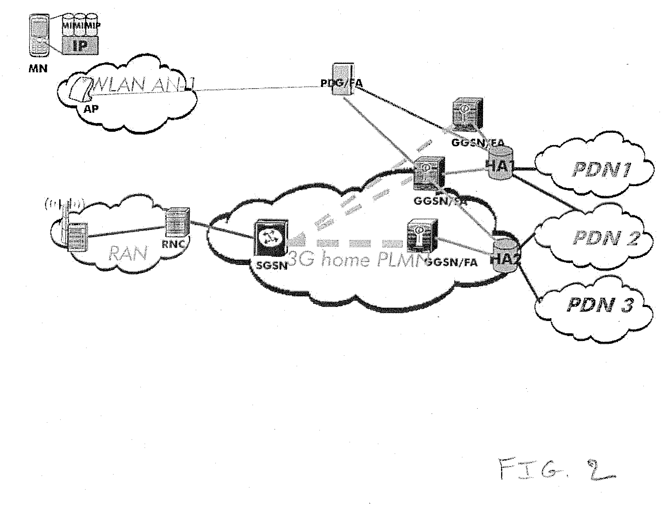

As recognized by the present invention, problems may arise in certain configurations, such as for example the configuration illustrated in figure 2.

In the example illustrated in figure 2, there is illustrated a mobile communication system supporting Mobile IP comprising:
- a Mobile Node MN,
- a first Access Network AN1, using WLAN technology,
- a second Access Network AN2, using 3GPP RAN technology,
- a 3GPP Core Network, including entities like SGSN, GGSN/FA, PDG/FA,
- at least one external packet data network PDN, via which access to external services is provided: in the illustrated example three PDNs, noted PDN1, PDN2, PDN3,
- at least one Home Agent HA linked to at least two PDNs: in the illustrated example two home agents, HA1 linked to PDN1 and PDN2, and HA2 linked to PDN2 and PDN3.

In non transparent access mode (as is the case with the process recalled in figure 1), the address allocated to the MN should be chosen in an address space belonging to the requested PDN or service, to which the user wants to connect.

Therefore, in the example of configuration illustrated in figure 2, if HA1 is selected, the allocated address should be chosen in an address space belonging to PDN1, or in an address space belonging to PDN2, depending on whether the user wants to connect to PDN1 or PDN2. In the same way, if HA2 is selected, the allocated address should be chosen from an address space belonging to PDN2, or from an address space belonging to PDN3, depending on whether the user wants to connect to PDN2 or PDN3.

However, as recognized by the present invention, with the current Mobile IP registration procedure and in particular with the currently specified format of the MIP Registration Request, it is not guaranteed that the allocated address will be allocated from an address space belonging to the right PDN, as the requested APN is usually only taken into account for HA selection, but not also for address allocation by the HA.

The present invention in particular enables to solve such problems, or to avoid such drawbacks. More generally, it is an object of the present invention to improve mobility handling, such as in particular roaming between different environments (such as for example different access technologies), while maintaining service continuity.

These and other objects are achieved, in one aspect of the present invention, by a method for mobility handling in the packet domain of a mobile communication system supporting Mobile IP, said method comprising:
- a step of home address allocation, using information representative of a requested Packet Data Network or service.

In an embodiment, said method comprises:
- a step wherein a Mobile Node sends to a Mobility Agent, information representative of a requested Packet Data Network or service, for home address allocation.

In an embodiment, said method comprises:
- a step wherein a Mobile Node sends said information to a Foreign Agent in a Mobile IP Registration Request.

In an embodiment, said method comprises:
- a step wherein a Foreign Agent sends said information to a Home Agent in a Mobile IP Registration Request.

In an embodiment, said method comprises:
- a step wherein a Home Agent allocates a home address using information representative of a requested Packet Data Network or service, received from a Foreign Agent in a Mobile IP Registration Request.

In an embodiment, said information corresponds to a requested Access Point Name.

In an embodiment, said steps are performed at session setup.

These and other objects are achieved, in another aspect of the present invention, by a Mobile Node comprising means for performing a method according to the present invention.

These and other objects are achieved, in another aspect of the present invention, by a Mobile Node comprising:
- means for sending information representative of a requested Packet Data Network or service, to a Mobility Agent, for home address allocation.

In an embodiment, said Mobile Node comprises:
- means for sending to a Foreign Agent a Mobile IP Registration Request containing said information.

These and other objects are achieved, in another aspect of the present invention, by a Mobility Agent comprising means for performing a method according to the present invention.

These and other objects are achieved, in another aspect of the present invention, by a Foreign Agent comprising means for performing a method according to the present invention.

These and other objects are achieved, in another aspect of the present invention, by a Foreing Agent, comprising:
- means for sending information representative of a requested Packet Data Network or service, to a Home Agent, for home address allocation.

These and other objects are achieved, in another aspect of the present invention, by a Home Agent comprising means for performing a method according to the present invention.

These and other objects are achieved, in another aspect of the present invention, by a Home Agent, comprising:
- means for allocating a home address, using information representative of a requested Packet Data Network or service.

In an embodiment, said Home Agent comprises:
- means for receiving said information from a Foreign Agent in a Mobile IP Registration Request.

These and other objects of the present invention will become more apparent from the following description taken in conjunction with the accompanying drawings:
- figure 1 is intended to recall the steps of a PDP context activation procedure with Mobile IP registration,
- figure 2 is intended to illustrate an example-of a system configuration in which the present invention may be used,
- figure 3 is intended to illustrate an example of 3GPP connection setup procedure, using a PDP context activation procedure with Mobile IP registration according to the present invention, in the example of system configuration illustrated in figure 2,
- figure 4 is intended to illustrate an example of 3GPP/WLAN handover procedure, following a 3GPP connection setup procedure as illustrated in figure 3.

To simplify, the following description will be made for the case of a single APN connection. The MN may, as illustrated in figure 2, have multiple MIP stack, for multi-simultaneous service requests; for multiple APN connections, the process would be repeated multiple times.

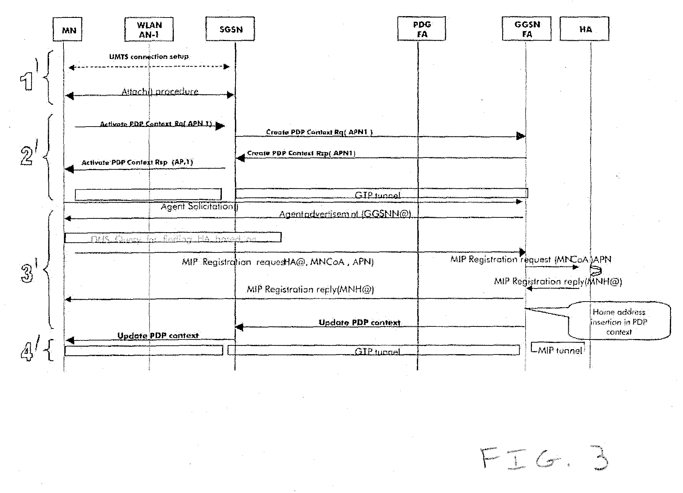

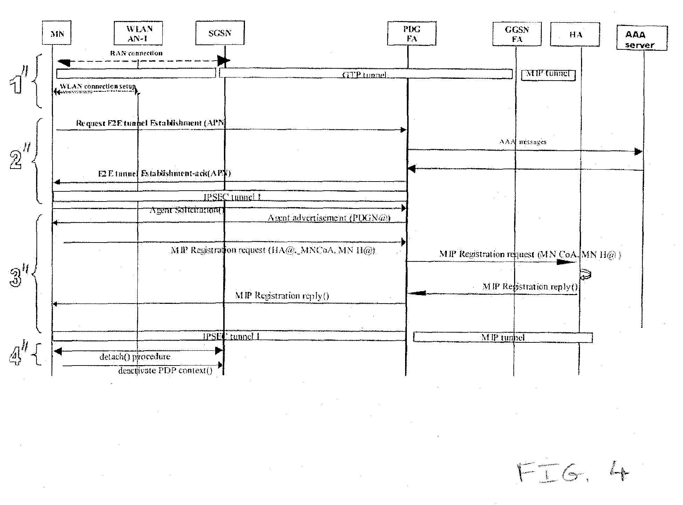

In the example illustrated in figure 3, a 3GPP Connection Setup procedure comprises the following steps:
In step 1':
   - a RAN connection is setup between MN and SGSN, followed by an attach procedure, using classical 3GPP mechanisms (not recalled here),
   - a PDP Context activation procedure is performed. As recalled in figure 1, the only difference with a classical PDP context creation comes from the fact that the GGSN does not allocate the MN IP@ (Mobile Node IP address), this is done by the HA. The PDP context is also created without the MN IP@, but simply with a MN identifier. A GTP tunnel is then established between the GGSN and the SGSN, without any precision on the MN IP@, but with a MN identifier in order to be able to use the GTP tunnel.
In step 3':
   - Using the direct connection (by tunnels) between the GGSN and the MN, the MIP FA function in the GGSN sends an Agent Advertisement to the MN after reception of an Agent Sollicitation sent by the MN. The Agent Advertisement contains the network address of the FA, this network address is a GGSN dedicated one. Then the MN can create a Care-of-address MNCoA by using a classical DHCP mechanism.
   - The MN sends a DNS query in order to find the HA connected to the APN1.
   - The GGSN interrogates the Home AAA (Authentication Authorization Accounting) server, in order to authenticate and authorize the MN.
   - The MN sends a Registration Request to the FA. In addition to other parameters not recalled here (such as the HA@ (Home Agent address) and the MNCoA) the Registration Request sent by the MN to the FA contains the APN identifier. This allows the allocation of the MNH@ (Mobile Node home address) in the address space corresponding to the right PDN since the HA is linked to multiple HA.
   - The FA sends a Registration Request to the HA, In addition to other parameters not recalled here (such as the MNCoA) the Registration Request sent by the FA to the HA contains the APN identifier. In this Registration Request no MN H@ is specified, this implies that the HA must allocate a MN H@ (in the APN network).
   - After Registration Replies, and advertisement of the MN H@, an entry in the Home Agent Binding Cache is created in order to make the correspondance between the MN CoA and the MN H@, and a MIP tunnel is established between HA and FA.
In step 4':
   At the end of MIP messages exchange, the Home Address of the MN which has been allocated by the HA is added in the PDP context, as recalled above.
   Then the traffic coming from the external PDN and addressed to the MN H@ is received by the HA, and then encapsulated to MN CoA.
   A handover corresponding to an inter-working 3GPP/WLAN scenario 4 is now described, in connection with figure 4. In this scenario the MN having setup a ) 3GPP connection as illustrated in figure 3 moves from 3GPP access network to WLAN access network.

The procedure illustrated in figure 4 comprises the following steps:
In step 1":
   A WLAN connection is established between the MN and the WLAN.
In step 2":
   - The MN first sends a DNS query in order to resolve the APN and to obtain an IP address corresponding to the PDG. The MN then requests from the PDG the establishment of an End-to-End tunnel. This End to End tunnel is classically an IPsec tunnel.
   - Due to the direct connection (by IPsec tunnel) between the PDG and the MN, the MIP FA function in the PDG then sends an Agent Advertisement to the MN after reception of an Agent Sollicitation sent by the MN. The Agent Advertisement contains the network address of the FA, this network address is a PDG dedicated one. Then the MN can create a Care-of-address by using a classical DHCP mechanism.
   - The MN sends a Registration Request to the FA. In addition to other parameters not recalled here, this Registration Request contains the MN H@ (allocated as described in figure 3).
   - The FA sends a Registration Request to the HA.

After Registration Replies, the entry in the Home Agent Binding Cache is updated in order to make the corresponding between the MN CoA and the MN H@, and a MIP tunnel is established between HA and FA.
In step 4":

The MN can be detached from the 3GPP network, i.e. can make a detach procedure, and a deactivate PDP Context procedure.
A procedure as disclosed in figure 4 thus corresponds to a "make before break". Since two logical interfaces are possibly maintained from two different radio access technologies on the same Mt,4, no traffic will be lost. If keeping a connection between the MN and the 3GPP is not possible during WLAN connection, the Home Agent could be used as a cache in order to not loose traffic but just delay its reception.
The present invention also has for its object entities such as a Mobile Node, and a Mobility Agent, such as in particular a Foreign Agent, and a Home Agent, comprising means for carrying out a method according to the present invention, for example as disclosed above in connection with figure 3.
The detailed implementation of the above-mentioned means does not raise any special problem for a person skilled in the art, and therefore such means do not need to be more fully disclosed than has been made above, by their function, for a person skilled in the art.

## Claims

1. A method for mobility handling in the packet domain of a mobile communication system supporting Mobile IP, said method comprising:
- a step of home address allocation, using information representative of a requested Packet Data Network or service.

2. A method according to claim 1, comprising:
- a step wherein a Mobile Node sends to a Mobility Agent, information representative of a requested Packet Data Network or service, for home address allocation.

3. A method according to claim 1 or 2, comprising:
- a step wherein a Mobile Node sends said information to a Foreign Agent in a Mobile IP Registration Request.

4. A method according to any of claims 1 to 3, comprising:
- a step wherein a Foreign Agent sends said information to a Home Agent in a Mobile IP Registration Request.

5. A method according to any of claims 1 to 4, comprising:
- a step wherein a Home Agent allocates a home address using information representative of a requested Packet Data Network or service, received from a Foreign Agent in a Mobile IP Registration Request.

6. A method according to any of claims 1 to 5, wherein said information corresponds to a requested Access Point Name.

7. A method according to any of claims 1 to 6, wherein said steps are performed at session setup.

8. A Mobile Node, comprising:
- means for sending information representative of a requested Packet Data Network or service, to a Mobility Agent, for home address allocation.

9. A Mobile Node according to claim 8, comprising:
- means for sending to a Foreign Agent a Mobile IP Registration Request containing said information.

10. A Foreing Agent, comprising:
- means for sending to a Home Agent a Mobile IP Registration Request containing information representative of a requested Packet Data Network or service, for home address allocation,

11. A Home Agent, comprising:
- means for allocating a home address using information representative of a requested Packet Data Network or service.

12. A Home Agent according to claim 11, comprising:
- means for receiving said information from a Foreign Agent in a Mobile IP Registration Request.
